# EUROPEAN PATENT APPLICATION

(11) **EP 2 434 762 A1**
(43) Date of publication of application: **28.03.2012**
(21) Application number: 11179026.7
(22) Date of filing: 26.08.2011
(51) Int. Cl.: H04N 9/09, H04N 9/04

(54) **Image capturing module and image capturing apparatus**

(30) Priority: 22.09.2010 JP 2010212028
(71) Applicant: Fujifilm Corporation, Minato-ku Tokyo 106-8620 (JP)
(72) Inventor: Ono, Shuji, Kanagawa (JP)
(74) Representative: Klunker . Schmitt-Nilson . Hirsch

(57) **Abstract**

An image capturing module comprising a first optical system that focuses light in a first wavelength region; a second optical system that focuses light in a second wavelength region and has a different focal position than the first optical system; a first light receiving section that includes a plurality of light receiving elements for receiving light from a subject through the first optical system; a second light receiving section that includes a plurality of light receiving elements for receiving light from the subject through the second optical system; and an image processing section that generates a composite image to have, as a brightness component over the first and second wavelength regions, an edge component extracted from a focused image, which is whichever of a first image captured by the first light receiving section and a second image captured by the second light receiving section the subject is more focused in.

## Description

### BACKGROUND

### 1. TECHNICAL FIELD

The present invention relates to an image capturing module and an image capturing apparatus.

### 2. RELATED ART

Non-Patent Document 1 and Patent Documents 1 to 4 describe techniques relating to chromatic aberration.
Non-Patent Document 1: F. Guichard, H. P. Nguyen, R. Tessieres, M. Pyanet, I. Tarchouna, and F. Cao., "Extended depth-of-field using sharpness transport across color channels", Proceedings of SPIE Novel Optical System Design and Optimization XI, vol. 7061, pp. 706 105-70 612, 2088.
Patent Document 1: Japanese Unexamined Patent Application Publication No. 2004-535033
Patent Document 2: International Publication No. 2006/095110
Patent Document 3: Japanese Unexamined Patent Application Publication No. 2008-532449
Patent Document 4: Japanese Unexamined Patent Application Publication No. H05-048833

There is a problem that a high-grade lens is necessary to achieve a large focal depth while considering axial chromatic aberration.

### SUMMARY

According to a first aspect related to the innovations herein, provided is an image capturing module comprising a first optical system that focuses light in a first wavelength region; a second optical system that focuses light in a second wavelength region and has a different focal position than the first optical system; a first light receiving section that includes a plurality of light receiving elements for receiving light from a subject through the first optical system; a second light receiving section that includes a plurality of light receiving elements for receiving light from the subject through the second optical system; and an image processing section that generates a composite image by combining a first image of the subject captured by the first light receiving section and a second image of the subject captured by the second light receiving section. In the image capturing module, the image processing section generates the composite image to have, as a brightness component over the first wavelength region and the second wavelength region, an edge component extracted from a focused image, which is whichever of the first image and the second image the subject is more focused in.

The image processing section may extract a spatial frequency component whose spatial frequency is higher than a predetermined value from the focused image, and generate the composite image by combining the extracted spatial frequency component with another image selected from among the first image and the second image.

The image processing section may select the focused image for each of a plurality of image regions, and generates the composite image by combining the edge component extracted from the selected focused image with another image for each image region. The image processing section may select the focused image based on spatial frequency components extracted respectively from the first image and the second image.

The first optical system may include a first lens that focuses light from the subject, the first light receiving section may include a first wavelength filter that transmits light in the first wavelength region from among the light from the subject, the second optical system may include a second lens that focuses light from the subject, and the second light receiving section may include a second wavelength filter that transmits light in the second wavelength region from among the light from the subject.

The first lens may have an axial chromatic aberration, and the second lens may have substantially the same focusing characteristics as the first lens.

The image capturing module may further comprise a third optical system that focuses light in a third wavelength region and has a different focal position than the first optical system and the second optical system, and a third light receiving section that includes a plurality of light receiving elements for receiving light from the subject through the third optical system. The image processing section may generate the composite image to have, as the brightness component over the first wavelength region, the second wavelength region, and the third wavelength region, an edge component extracted from the focused image, which is whichever of the first image, the second image, and a third image captured by the third light receiving section the subject is more focused in.

The light receiving elements of the first light receiving section, the second light receiving section, and the third light receiving section may all be formed on a single substrate.

A plurality of the first optical systems may be provided that each have a different focal position, a plurality of the first light receiving sections may be provided corresponding to the first optical systems, and the image processing section may generate the composite image to have, as the brightness component over the first wavelength region, the second wavelength region, and the third wavelength region, an edge component extracted from the focused image, which is whichever of a plurality of the first images captured by the first light receiving sections, the second image, and the third image the subject is most focused in. The first wavelength region may be a green wavelength region.

The summary clause does not necessarily describe all necessary features of the embodiments of the present invention. The present invention may also be a subcombination of the features described above.

### BRIEF DESCRIPTION OF THE DRAWINGS

Fig. 1 is a schematic view of an exemplary block configuration of an image capturing apparatus 100.
Fig. 2 is a schematic view of an exemplary block configuration of the image capturing module.
Fig. 3 is a schematic view of an exemplary image process performed by the image processing section 340.
Fig. 4 is a schematic view of an exemplary high-frequency component adding process.
Fig. 5 is a schematic view of exemplary image processing for each of a plurality of image regions.
Fig. 6 shows an exemplary image capturing apparatus 600 according to another embodiment of the present invention.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

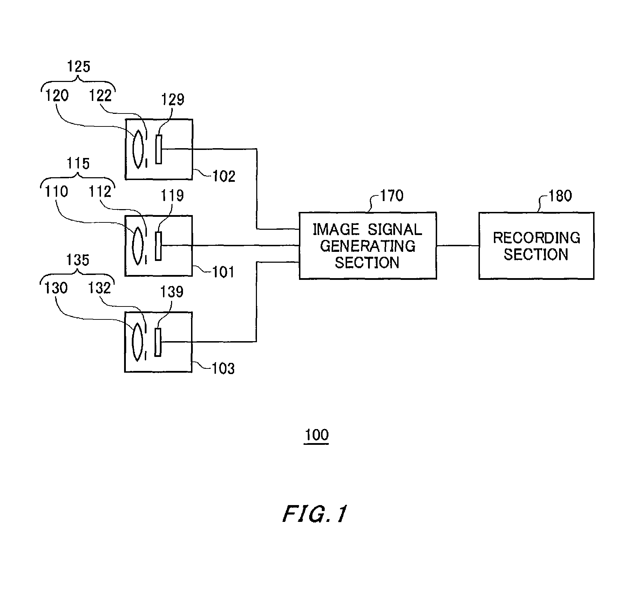

Fig. 1 is a schematic view of an exemplary block configuration of an image capturing apparatus 100. It is an objective of the present embodiment to provide an image capturing apparatus that effectively has a large depth-of-field. The image capturing apparatus 100 includes a first image capturing system 101, a second image capturing system 102, a third image capturing system 103, an image signal generating section 170, and a recording section 180. The first image capturing system 101, the second image capturing system 102, the third image capturing system 103, and the image signal generating section 170 function as an image capturing module incorporated in the image capturing apparatus 100.

The first image capturing system 101 captures an image of a subject with light in the green wavelength region. The second image capturing system 102 captures an image of the subject with light in the blue wavelength region. The third image capturing system 103 captures an image of the subject with light in the red wavelength region. The green light, blue light, and red light are respectively examples of light in a first wavelength region, a second wavelength region, and a third wavelength region. The first image capturing system 101, the second image capturing system 102, and the third image capturing system 103 each have different positions on the image capturing optical axis and each capture an image of the subject with light in a different wavelength region.

The first image capturing system 101 includes a first optical system 115 that focuses green light and a first light receiving section 119 that receives light from the subject through the first optical system 115. The first optical system 115 includes a first lens 110 that focuses the light from the subject and a first diaphragm section 112 that adjusts the amount of light transmitted by the first optical system 115. The first light receiving section 119 captures an image of the subject by receiving green light from among the light from the subject focused by the first lens 110.

The second image capturing system 102 and the third image capturing system 103 each include optical components that have functions similar to the components of the first image capturing system 101. Specifically, the second image capturing system 102 includes a second optical system 125 that focuses blue light and a second light receiving section 129 that receives the light from the subject through the second optical system 125. The second optical system 125 includes a second lens 120 and a second diaphragm section 122. The third image capturing system 103 includes a third optical system 135 that focuses red light and a third light receiving section 139 that receives the light from the subject through the third optical system 135. The third optical system 135 includes a third lens 130 and a third diaphragm section 132.

The second lens 120 and third lens 130 are optical components corresponding to the first lens 110, and the second diaphragm section 122 and third diaphragm section 132 are optical components corresponding to the first diaphragm section 112. The second optical system 125 and third optical system 135 are optically designed for light in the blue wavelength region and light in the red wavelength region, respectively. The second optical system 125 has a different focal position than the first optical system 115. The third optical system 135 has a focal position that is different from both the first optical system 115 and the second optical system 125. Specifically, for green, blue, and red light from an object point, the focal position of the green light through the first optical system 115, the focal position of the blue light through the second optical system 125, and the focal position of the red light through the third optical system 135 are each different. For example, the focal positions can be made to differ for each wavelength region by using a lens having axial chromatic aberration as the first lens 110 and using a lens having substantially the same focusing characteristics as the first lens 110 as the second lens 120.

The second light receiving section 129 and the third light receiving section 139 are optical components corresponding to the first light receiving section 119. The second light receiving section 129 and the third light receiving section 139 have substantially the same function as the first light receiving section 119, except that the second light receiving section 129 captures an image of the subject with blue light and the third light receiving section 139 captures an image of the subject with red light.

The first image capturing system 101, the second image capturing system 102, and the third image capturing system 103 each capture an image of the same subject with light in the corresponding wavelength region, thereby generating a green component image, a blue component image, and a red component image. The image signal generating section 170 acquires image capture signals indicating the green component image, the blue component image, and the red component image respectively from the first image capturing system 101, the second image capturing system 102, and the third image capturing system 103.

The image signal generating section 170 selects a focused image, which is the image in which the subject is most accurately focused, from among the green component image, the blue component image, and the red component image acquired from the first image capturing system 101, the second image capturing system 102, and the third image capturing system 103. The image signal generating section 170 extracts an edge component from the focused image. The image signal generating section 170 reproduces the edge components of the other two images that are not focused, by superimposing the extracted edge component as the edge component in each of the two images. The image signal generating section 170 generates an image signal indicating the output image, by combining the color of the image signal indicating the focused image with the colors of the two image signals on which the edge component is superimposed.

The recording section 180 records the image signal generated by the image signal generating section 170. The recording section 180 may record the image indicated by the image signal received from the image signal generating section 170 in a nonvolatile memory. The recording section 180 may include the nonvolatile memory. As another example, the nonvolatile memory may be an external memory that can be attached to and detached from the image capturing apparatus 100. The recording section 180 may output the image to the outside of the image capturing apparatus 100.

When a focused image can be acquired by one of the optical systems, the image capturing apparatus 100 can enhance edge components of other images by using the edge component of the acquired image. Therefore, the image capturing apparatus 100 can generate an output image with edges that are effective over a broad wavelength region. Accordingly, the image capturing apparatus 100 can treat a subject positioned within a depth-of-field of any one of the first optical system 115, the second optical system 125, and the third optical system 135 as being a subject in the depth-of-field of the image capturing apparatus 100. As a result, the image capturing apparatus 100 can effectively achieve a depth-of-field that is significantly larger than the depth-of-field of each individual optical system.

In order to favorably correct axial chromatic aberration over a broad wavelength region while maintaining a large depth-of-field using a single focusing lens, it is necessary for the lens to have a high-grade optical design. Furthermore, it is necessary to actively control the axial chromatic aberration while maintaining favorable focus of the light in each wavelength region when changing the focal position of each wavelength region using a single lens, and therefore this requires an extremely high-grade optical design. On the other hand, the image capturing apparatus 100 only needs to be designed such that each optical system has a corresponding wavelength region. In this way, the image capturing apparatus 100 can achieve an optical system design that has favorable focusing characteristics and controllable focusing distance, without using a high-grade optical design for chromatic aberration. As a result, the image capturing apparatus 100 can achieve an effectively large depth-of-field without using a high-grade optical design.

The image capturing apparatus 100 may be image capturing equipment such as a digital camera or a cellular phone with an attached camera function. The image capturing module including the first image capturing system 101, the second image capturing system 102, the third image capturing system 103, and the image signal generating section 170 can be provided as a camera module for this image capturing equipment.

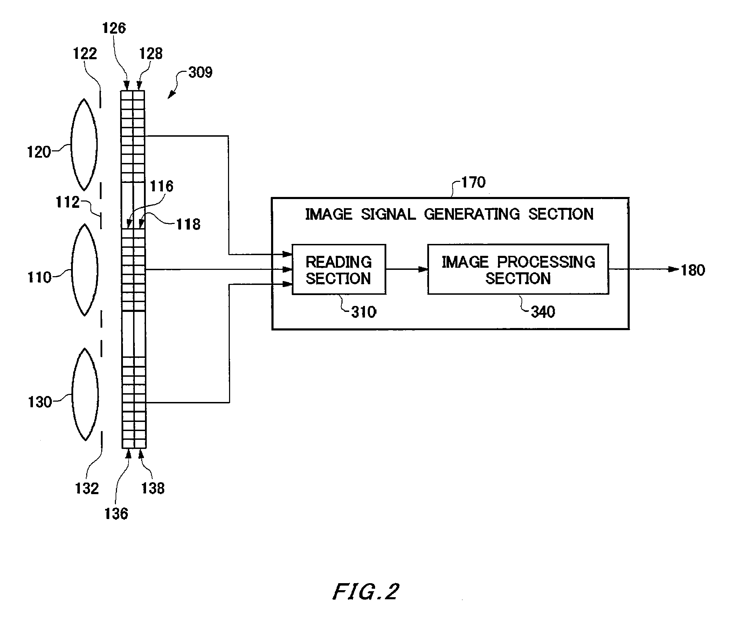

Fig. 2 is a schematic view of an exemplary block configuration of the image capturing module of the image capturing apparatus 100. Here, the block configuration of the first image capturing system 101, the second image capturing system 102, and the third image capturing system 103 is shown schematically along with the block configuration of the image signal generating section 170.

The image signal generating section 170 includes a reading section 310 and an image processing section 340. The first lens 110, the second lens 120, and the third lens 130 have optical axes that are parallel to each other. In other words, the image capturing axes of the first image capturing system 101, the second image capturing system 102, and the third image capturing system 103 are parallel to each other. Each image capturing system is provided such that the position of each image capturing axis differs in a plane orthogonal to the image capturing axes. The first light receiving section 119 of the first image capturing system 101, the second light receiving section 129 of the second image capturing system 102, and the third light receiving section 139 of the third image capturing system 103 are provided integrally as a light receiving section 309.

The first light receiving section 119 includes a first color filter array 116 and a first light receiving element array 118. The second light receiving section 129 includes a second color filter array 126 and a second light receiving element array 128. The third light receiving section 139 includes a third color filter array 136 and a third light receiving element array 138.

The following describes the optical configuration of the first image capturing system 101. The first lens 110 is a focusing lens. The light transmitted by the first optical system 115 is limited by passing through the aperture of the first diaphragm section 112.

The first color filter array 116 includes a plurality of color filters that selectively transmit light in the green wavelength region. The first color filter array 116 is an example of a first wavelength filter that transmits light in a first wavelength region from among the light from the subject. The first light receiving element array 118 includes a plurality of light receiving elements that receive the light from the subject through the first optical system 115. The light receiving elements of the first light receiving element array 118 correspond to the color filters of the first color filter array 116. Each light receiving element receives light that is transmitted by the corresponding color filter, from among the light from the subject incident to the first color filter array 116. Each light receiving element outputs an image capture signal with a strength corresponding to the amount of light received. In this way, the first light receiving element array 118 has a plurality of light receiving elements that capture an image using light from the subject focused by the first lens 110.

The following describes the optical configurations of the second image capturing system 102 and the third image capturing system 103. The second lens 120 and the third lens 130 are each a focusing lens. The light transmitted by the second optical system 125 is limited by passing through an aperture of the second diaphragm section 122. The light transmitted by the third optical system 135 is limited by passing through an aperture of the third diaphragm section 132.

The second color filter array 126 includes a plurality of color filters that selectively transmit light in the blue wavelength region. The second color filter array 126 is an example of a second wavelength filter that transmits light in a second wavelength region from among the light from the subject. The third color filter array 136 includes a plurality of color filters that selectively transmit light in the red wavelength region. The third color filter array 136 is an example of a third wavelength filter that transmits light in a third wavelength region from among the light from the subject.

The second light receiving section 129 includes a plurality of light receiving elements that receive the light from the subject through the second optical system 125. Specifically, the second light receiving element array 128 receives light from the subject through the second color filter array 126. Aside from the points described above, the second light receiving element array 128 has substantially the same optical configuration as the first light receiving element array 118, and therefore further description is omitted. The third light receiving section 139 includes a plurality of light receiving elements that receive the light from the subject through the third optical system 135. Specifically, the third light receiving element array 138 receives light from the subject through the third color filter array 136. Aside from the points described above, the third light receiving element array 138 has substantially the same optical configuration as the first light receiving element array 118, and therefore further description is omitted.

The following describes the optical configuration of the light receiving section 309. The light receiving elements included in the first light receiving section 119, the second light receiving section 129, and the third light receiving section 139 are arranged in the same plane. For example, the light receiving elements of the first light receiving element array 118, the light receiving elements of the second light receiving element array 128, and the light receiving elements of the third light receiving element array 138 may be formed on the same substrate. Each light receiving element may be formed simultaneously on one surface of the same substrate using the same process. The color filters of the first color filter array 116, the second color filter array 126, and the third color filter array 136 may also be formed above the corresponding light receiving elements simultaneously, using the same process. In this way, the light receiving section 309 can be manufactured such that the first light receiving section 119, the second light receiving section 129, and the third light receiving section 139 are formed integrally therein. The image capturing surface of the first light receiving section 119, the image capturing surface of the second light receiving section 129, and the image capturing surface of the third light receiving section 139 are each a partial region of the image capturing surface of the light receiving section 309. In this way, the light receiving elements of the first light receiving section 119, the second light receiving section 129, and the third light receiving section 139 are formed on the same substrate. The first image capturing system 101, the second image capturing system 102, and the third image capturing system 103 each capture an image of the subject using the light receiving elements formed in the corresponding region of the substrate. The first light receiving section 119, the second light receiving section 129, and the third light receiving section 139 may be manufactured individually and then assembled together.

The light receiving elements of each image capturing system are exposed to light at substantially the same time. When the light receiving elements are exposed, the reading section 310 reads the image capture signals from the light receiving elements. The reading section 310 may include a read circuit that is formed on the same substrate as the light receiving elements. One read circuit may be provided for each image capturing system, and may sequentially read the image capture signals from the light receiving elements of the corresponding image capturing system. The read circuits may be provided independently to the image capturing systems.

The light receiving elements of the image capturing systems may be MOS image capturing elements. If the light receiving elements are MOS image capturing elements formed on one surface of the same substrate using the same process, the reading section 310 can perform partial reading for each optical system of each image capturing system. The light receiving elements of the image capturing systems may be implemented as solid image capturing elements such as CCD image capturing elements, instead of as MOS image capturing elements.

The image capture signals read from the light receiving elements of the image capturing systems by the reading section 310 are supplied to the image processing section 340. The image processing section 340 performs the edge combining process described above on the green component image, the blue component image, and the red component image, which are respectively the image of the subject captured by the first light receiving section 119, the image of the subject captured by the second light receiving section 129, and image of the subject captured by the third light receiving section 139. The image processing section 340 generates a composite image by combining the green component image, the blue component image, and the red component image, and supplies the composite image to the recording section 180. The specific image processing performed by the image processing section 340 on the image in each wavelength region is described further below.

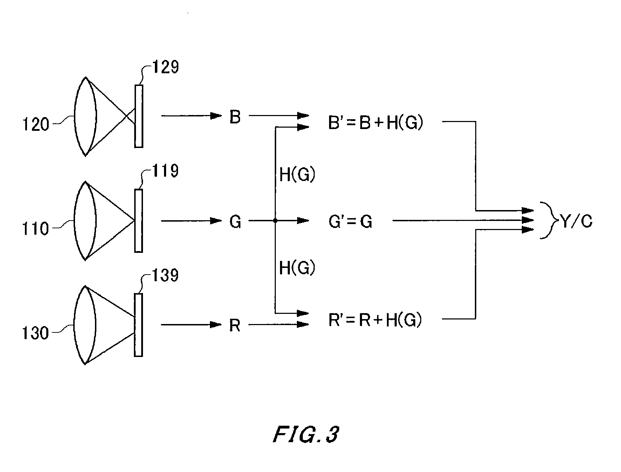

Fig. 3 is a schematic view of an exemplary image process performed by the image processing section 340. In this example, the subject is positioned at a specified distance from the image capturing apparatus 100. The green light from the subject is focused at the position of the first light receiving section 119 by the first lens 110.

For ease of explanation, the first lens 110, the second lens 120, and the third lens 130 each have substantially the same focusing characteristics with respect to light in the same wavelength region. The first light receiving element array 118 of the first lens 110 can selectively receive the green light transmitted by the first color filter array 116, and substantially does not receive the red light or the blue light. Therefore, the green component image generated by the first light receiving element array 118 of the first light receiving section 119 shows a clear subject image.

The second lens 120 focuses the blue light from the subject at a position in front of the second light receiving section 129. The second light receiving element array 128 of the second light receiving section 129 can selectively receive the blue light transmitted by the second color filter array 126, and substantially does not receive the green light or the red light. Therefore, the blue component image generated by the second light receiving element array 128 of the second light receiving section 129 shows a subject image that is not as clear as that of the green component image.

The third lens 130 focuses the blue light from the subject at a position behind the third light receiving section 139. The third light receiving element array 138 of the third light receiving section 139 can selectively receive the reed light transmitted by the third color filter array 136, and substantially does not receive the green light or the blue light. Therefore, the red component image generated by the third light receiving element array 138 of the third light receiving section 139 shows a subject image that is not as clear as that of the green component image.

In this case, the image processing section 340 selects the green component image as the focused image. The green component image can provide a clearer subject image than the blue component image and the red component image, and therefore the image processing section 340 generates the green component image as a green component image G'.

The image processing section 340 generates a blue component image B' and a red component image R' using the edge component of the focused image. Specifically, the image processing section 340 extracts a high-frequency component from the green image component, which is the focused image, using a high-pass filter H. For the image signal of the green component image, the image signal of the blue component image, and the image signal of the red component image, if the high-pass filtering process for an image signal of a color C is represented as H(C), then the extracted high-frequency component can be represented as H(G). The image processing section 340 generates the blue component image B' as the sum B+H(G). The image processing section 340 generates the red component image R' as the sum R+H(G). In this way, the image processing section 340 generates the blue component image B' by combining the blue component image with the edge component extracted from the focused image. Furthermore, the image processing section 340 generates the red component image R' by combining the red component image with the edge component extracted from the focused image.

The image processing section 340 converts the image signal of the green component image G', the image signal of the blue component image B', and the image signal of the red component image R' into a brightness signal Y and a color signal C. The image processing section 340 outputs the brightness signal Y and the color signal C to the recording section 180. The brightness signal Y includes the edge component extracted from the focused image as the brightness component. In this way, the image processing section 340 generates the composite image to include, as the brightness component over the blue, green, and red wavelength regions, the edge component extracted from the focused image, which is the most focused image from among the green component image, the blue component image, and the red component image.

In the above description, the image processing section 340 converts an RGB image signal into the brightness signal Y and the color signal C and outputs the brightness signal Y and the color signal C, but instead, the image processing section 340 may output the image signal of the green component image G', the image signal of the blue component image B', and the image signal of the red component image R' as an RGB signal. Since a brightness signal can be defined by the RGB signal, the composite image indicated by the RGB signal is an example of the image signal of the composite image including the brightness component over the red, green, and blue wavelength regions. In other words, the composite image can be a combination of the red component image R', the green component image G', and the blue component image B'.

In this example, the green light from the subject is focused at the first light receiving section 119 by the first lens 110. If the subject is closer to the image capturing apparatus 100, especially if the subject is at a position that causes the blue light to be focused at the second light receiving section 129, the subject image with the strongest high-frequency component can be acquired from the blue component image. Accordingly, the image processing section 340 generates, as the blue component image B', the blue component image selected as the focused image. The image processing section 340 then generates the green component image G' as the sum G+H(B). The image processing section 340 generates the red component image R' as the sum R+H(B).

If the subject is further from the image capturing apparatus 100, especially if the subject is at a position that causes the red light to be focused at the third light receiving section 139, the subject image with the strongest high-frequency component can be acquired from the red component image. Accordingly, the image processing section 340 generates, as the red component image R', the red component image selected as the focused image. The image processing section 340 then generates the green component image G' as the sum G+H(R). The image processing section 340 generates the blue component image B' as the sum B+H(R).

The image capturing apparatus 100 can provide clear images of the subject whose blue light is focused at the second light receiving section 129, whose green light is focused at the first light receiving section 119, and whose red light is focused at the third light receiving section 139. If the depth-of-field and the focal distance of each lens is designed such that the near end of the depth-of-field of the first lens 110 matches the far end of the depth-of-field of the second lens 120 and the far end of the depth-of-field of the first lens 110 matches the near end of the depth-of-field of the third lens 130, the depth-of-field of the image capturing apparatus 100 can be treated as being from the near end of the second lens 120 to the far end of the third lens 130. The first lens 110, the second lens 120, and the third lens 130 may be designed respectively for light in the green wavelength region, light in the blue wavelength region, and light in the red wavelength region. Therefore, compared to designing the chromatic aberration in consideration of a wavelength region from blue to red, adjusting the depth-of-field and the focal distance as described above is much easier. Accordingly, the image capturing apparatus 100 can achieve a depth-of-field that is significantly larger than the depth-of-field achieved by each individual optical system, without requiring a high-grade optical design.

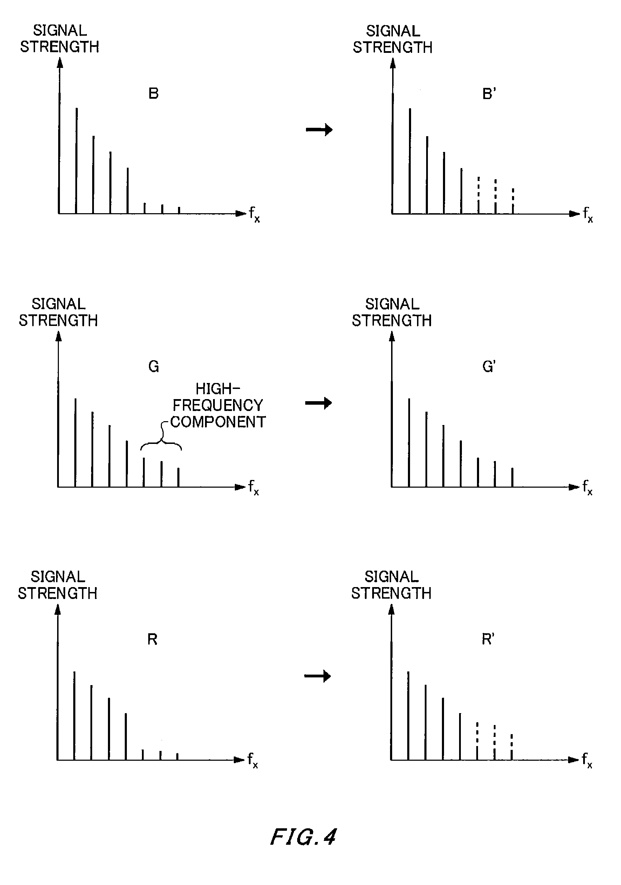

Fig. 4 is a schematic view of an exemplary high-frequency component adding process performed by the image processing section 340. As described in relation to Fig. 3, the subject in this example has green light that is focused at the first light receiving section 119. The image processing section 340 extracts, from each of the green component image, the blue component image, and the red component image, a high frequency component in a region of spatial frequency higher than a predetermined value. When the green light from the subject is focused at the first light receiving section 119 by the first lens 110, the high-frequency component with the greatest signal strength can be obtained from the green component image, as shown in Fig. 3. High-frequency components with lower signal strength than the high-frequency component extracted from the green component image are extracted from the blue component image and the red component image.

The image processing section 340 selects as the focused image, from among the green component image, the blue component image, and the red component image, the green component image from which is extracted the high-frequency component having the greatest signal strength in the region of spatial frequency higher than the predetermined value. The image processing section 340 generates the blue component image B' by combining the high-frequency component extracted from the green component image with the blue image component in the spatial frequency region. The image processing section 340 generates the red component image R' by combining the high-frequency component extracted from the green component image with the red image component in the spatial frequency region.

In this way, the image processing section 340 selects the focused image based on the spatial frequency component extracted from each of the green component image, the blue component image, and the red component image. More specifically, the image processing section 340 selects the focused image to be the image, from among the green component image, the blue component image, and the red component image, from which is extracted the strongest spatial frequency component at a spatial frequency greater than the predetermined value. The image processing section 340 generates the composite image by extracting from the focused image the spatial frequency component with a spatial frequency higher than the predetermined value and combining this spatial frequency component with a first image and a second image.

The green component image, the blue component image, and the red component image may each have a different signal strength according to the color of the subject. Accordingly, when selecting the focused image, the image processing section 340 normalizes the spatial frequency components and selects the focused image to be the image from which is extracted the strongest spatial frequency component at a spatial frequency greater than the predetermined value, based on the normalized spatial frequency components. For example, the image processing section 340 may normalize the spatial frequency components for each wavelength region with an average brightness value of an image block from which the spatial frequency is extracted. In this way, the image processing section 340 can more accurately select the focused image.

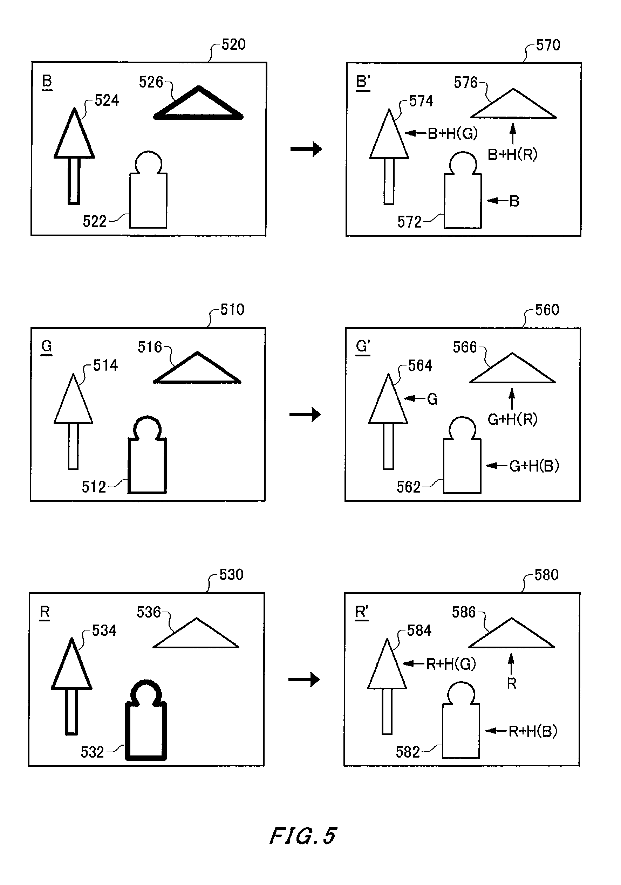

Fig. 5 is a schematic view of exemplary image processing for each of a plurality of image regions by the image processing section 340. This example includes a close subject that is at a position closest to the image capturing apparatus 100, a distant subject that is at a position farthest from the image capturing apparatus 100, and an intermediate subject that is at a position between the close subject and the distant subject. For ease of explanation, the blue light from the close subject is focused at the position of the second light receiving section 129 by the second lens 120. The green light from the intermediate subject and the red light from the distant subject are respectively focused at the first light receiving section 119 and the third light receiving section 139.

The image of the close subject includes a blue component image 520, a green component image 510, and a red component image 530 respectively as a close subject image 522, a close subject image 512, and a close subject image 532. Among these images, the close subject image 522 of the blue component image 520 is the clearest. Accordingly, the image processing section 340 selects the blue component image 520 as the focused image in the image region where the close subject image exists. When generating an expanded depth image 560 in the green wavelength region, the image processing section 340 generates a close subject image 562, which is an image of the image region in which the close subject image exists, by combining the high-frequency component extracted from the close subject image 522 with the close subject image 512. More specifically, the image processing section 340 generates the close subject image 562 by performing the G+H(B) process. Furthermore, when generating the expanded depth image 580 in the red wavelength region, the image processing section 340 generates a close subject image 582 by combining the high-frequency component extracted from the close subject image 522 with the close subject image 532. More specifically, the image processing section 340 generates the close subject image 582 by performing the R+H(B) process. The image processing section 340 generates the close subject image 522 as the close subject image 572 of the blue-component expanded depth image 570.

The image of the intermediate subject includes the blue component image 520, the green component image 510, and the red component image 530 respectively as an intermediate subject image 524, an intermediate subject image 514, and an intermediate subject image 534. Among these images, the intermediate subject image 514 of the green component image 510 is the clearest. Accordingly, the image processing section 340 selects the green component image 510 as the focused image in the image region where the intermediate subject image exists. When generating the expanded depth image 570 in the blue wavelength region, the image processing section 340 generates an intermediate subject image 574, which is an image of the image region in which the intermediate subject image exists, by combining the high-frequency component extracted from the intermediate subject image 514 with the intermediate subject image 524. More specifically, the image processing section 340 generates the intermediate subject image 574 by performing the B+H(G) process. Furthermore, when generating the expanded depth image 580 in the red wavelength region, the image processing section 340 generates an intermediate subject image 584 by combining the high-frequency component extracted from the intermediate subject image 514 with the intermediate subject image 534. More specifically, the image processing section 340 generates the intermediate subject image 584 by performing the R+H(G) process. The image processing section 340 generates the intermediate subject image 514 as the intermediate subject image 564 of the expanded depth image 560.

The image of the distant subject includes the blue component image 520, the green component image 510, and the red component image 530 respectively as a distant subject image 526, a distant subject image 516, and a distant subject image 536. Among these images, the distant subject image 536 of the red component image 530 is the clearest. Accordingly, the image processing section 340 selects the red component image 530 as the focused image in the image region where the distant subject image exists. When generating the expanded depth image 570 in the blue wavelength region, the image processing section 340 generates a distant subject image 576, which is an image of the image region in which the distant subject image exists, by combining the high-frequency component extracted from the distant subject image 536 with the distant subject image 526. More specifically, the image processing section 340 generates the distant subject image 576 by performing the B+H(R) process. Furthermore, when generating the expanded depth image 560 in the green wavelength region, the image processing section 340 generates a distant subject image 566 by combining the high-frequency component extracted from the distant subject image 536 with the distant subject image 516. More specifically, the image processing section 340 generates the distant subject image 566 by performing the G+H(R) process. The image processing section 340 generates the distant subject image 536 as the distant subject image 586 of the expanded depth image 580.

In this way, the image processing section 340 generates the composite image by selecting a focused image for each image region and combining the edge component extracted from each focused image with other images in each image region. As a result, the image capturing apparatus 100 can obtain a close subject image, an intermediate subject image, and a distant subject image that are clear in each of the expanded depth image 560, the expanded depth image 570, and the expanded depth image 580. In the manner described above, the image processing section 340 can generate a composite image that includes, as the brightness component over the green, blue, and red wavelength regions, the edge component from whichever of the green component image, the blue component image, and the red component image has the most focused subject image.

In the above description, the image processing section 340 combines the high-frequency component extracted from the color component image having the best focus with other images. Instead, the image processing section 340 may combine high-frequency components extracted respectively from two or more images with other images. For example, the image processing section 340 may perform a process to generate the B' component as B' = B+a_{B,R}H_{B,R}(R)+a_{B,G}H_{B,G}(G)+a_{B,B}H_{B,B}(B). Here, a_{B,i} is a weighted coefficient with respect to a color component represented by i (i = R, G, B) when generating the blue-component expanded depth image, and H_{B,i} is a high-pass filter to be applied to a color component represented by i when generating the blue-component expanded depth image. When represented as a generalized color C that can be applied for both the G' and R' components, the above expression can be represented as C'i = Cᵢ+a_{i,R}H_{i,R}(C_{R})+a_{i,G}H_{i,G}(C_{G})+a_{i,B}H_{i,B}(C_{B}). Here, Cᵢ is a color component identified by i, and C_{R,} C_{G,} and C_{B} respectively correspond to the red, green, and blue signals. In this way, the image processing section 340 may generate an expanded depth image in each wavelength region that is weighted differently according to the wavelength regions of the images being combined.

In the above description, the image capturing apparatus 100 captures images using three lenses that correspond respectively to visible light in the red, green, and blue wavelength regions. Instead, the image capturing apparatus 100 can be configured to capture images through two lenses that correspond to two different wavelength regions. With this configuration as well, the image processing section 340 can generate the composite image using a process similar to the process described above. For example, with these two wavelength regions referred to as a first wavelength region and a second wavelength region, the image processing section 340 may generate a composite image that includes an edge component extracted from the focused image, which is whichever of the image of the first wavelength region and the image of the second wavelength region that has a more focused subject, as the brightness component over the first and second wavelength regions. As another example, the image capturing apparatus 100 can be configured to capture images with four or more lenses corresponding to different wavelength regions. Each of the image capturing apparatuses described above can adopt the same functional configuration as the image capturing apparatus 100 described in relation to Figs. 1 to 5, and therefore further description is omitted.

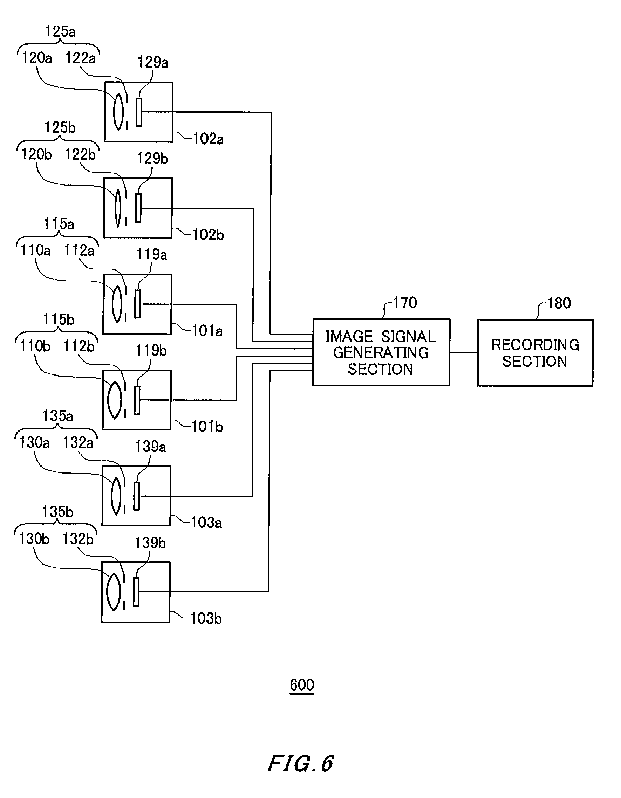

Fig. 6 shows an exemplary image capturing apparatus 600 according to another embodiment of the present invention. The image capturing apparatus 600 includes first image capturing systems 101a and 101b, second image capturing systems 102a and 102b, third image capturing systems 103a and 103b, the image signal generating section 170, and the recording section 180. The first image capturing system 101a, the second image capturing system 102a, and the third image capturing system 103a are respectively the same as the first image capturing system 101, the second image capturing system 102, and the third image capturing system 103 described in relation to Figs. 1 to 5. Therefore, further description of these components is omitted.

The first image capturing system 101b captures an image of the subject with green light, in the same manner as the first image capturing system 101 a. The first image capturing system 101b includes a first optical system 115b and a first light receiving section 119b. The first light receiving section 119b has substantially the same optical components as the first light receiving section 119a, and therefore further description is omitted. The first optical system 115b includes a first lens 110b and a first diaphragm section 112b. The first optical system 115b has a different focal position than the first lens 110a. More specifically, the focal position of green light by the first lens 120b is different from the focal position of green light by the first lens 120a.

The second image capturing system 102b captures an image of the subject with blue light, in the same manner as the second image capturing system 102a. The second image capturing system 102b includes a second optical system 125b and a second light receiving section 129b. The second light receiving section 129b has substantially the same optical components as the second light receiving section 129a, and therefore further description is omitted. The second optical system 125b includes a second lens 120b and a second diaphragm section 122b. The second optical system 125b has a different focal position than the second lens 120a. More specifically, the focal position of blue light by the second lens 120b is different from the focal position of blue light by the second lens 120a.

The third image capturing system 103b captures an image of the subject with red light, in the same manner as the third image capturing system 103a. The third image capturing system 103b includes a third optical system 135b and a third light receiving section 139b. The third light receiving section 139b has substantially the same optical components as the third light receiving section 139a, and therefore further description is omitted. The third optical system 135b includes a third lens 130b and a third diaphragm section 132b. The third optical system 135b has a different focal position than the third lens 130a. More specifically, the focal position of red light by the third lens 130b is different from the focal position of red light by the third lens 130a.

The focal position of the green light by the first lens 110b, the focal position of the green light by the first lens 110a, the focal position of the blue light by the second lens 120b, the focal position of the blue light by the second lens 120a, the focal position of the red light by the third lens 130b, and the focal position of the red light by the third lens 130a are each different. The image processing section 340 generates the composite image to include, as the brightness component over the first, second, and third wavelength regions, the edge component extracted from whichever image contains the most focused subject from among the two images captured by the first light receiving sections 119a and 119b, the two images captured by the second light receiving sections 129a and 129b, and the two images captured by the third light receiving sections 139a and 139b. The specific manner in which the image processing section 340 performs the combination is the came as the process described in relation to Figs. 1 to 5, and therefore further description is omitted.

As a result of including two image capturing systems for each wavelength region, the image capturing apparatus 600 of the present embodiment can expand the depth-of-field. Furthermore, two images can be obtained from the light in each wavelength region. Therefore, when combining the edge component extracted from the focused image with an image captured using light in a certain wavelength region, the image processing section 340 may combine the edge component with whichever of the two images captured using the light in this wavelength region is more focused. As a result, the image capturing apparatus 600 can obtain a clearer subject image for each color component.

In the present embodiment, the image capturing apparatus 600 includes two image capturing systems for each of the three wavelength regions. As another example, the image capturing apparatus 600 can be configured to include two image capturing systems for one wavelength region and include one image capturing system for each of the other wavelength regions. For example, the image capturing apparatus 600 may include the first image capturing system 101a, the first image capturing system 101b, the second image capturing system 102a, and the third image capturing system 103a. Furthermore, the image capturing apparatus 600 can include three or more image capturing systems for a single wavelength region.

As described above, the image capturing apparatus may include a plurality of first optical systems 115 with different focal positions and a plurality of first light receiving sections 119 corresponding to the first optical systems 115. With this configuration, the image processing section 340 can generate the composite image to include, as the brightness component over the first, second, and third wavelength region, the edge component extracted from whichever image contains the most focused subject, from among the images captured by the plurality of first light receiving sections 119 and one or more images captured by other light receiving sections.

The function of each component in the image capturing apparatus 100 and the image capturing apparatus 600 described above can be realized by a program and a computer. For example, the computer can function as the recording section 180 and each component of the image signal generating section 170, as a result of a processor of the computer operating according to commands provided by the program to control a peripheral device. This program may be recorded in a recording medium such as a CD-ROM, a semiconductor memory, or a hard disk. The computer can be provided with the program by reading the program from the recording medium.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

## Claims

1. An image capturing module comprising:
a first optical system that focuses light in a first wavelength region;
a second optical system that focuses light in a second wavelength region and has a different focal position than the first optical system;
a first light receiving section that includes a plurality of light receiving elements for receiving light from a subject through the first optical system;
a second light receiving section that includes a plurality of light receiving elements for receiving light from the subject through the second optical system; and
an image processing section that generates a composite image by combining a first image of the subject captured by the first light receiving section and a second image of the subject captured by the second light receiving section, wherein
the image processing section generates the composite image to have, as a brightness component over the first wavelength region and the second wavelength region, an edge component extracted from a focused image, which is whichever of the first image and the second image the subject is more focused in.

2. The image capturing module according to Claim 1, wherein
the image processing section extracts a spatial frequency component whose spatial frequency is higher than a predetermined value from the focused image, and generates the composite image by combining the extracted spatial frequency component with another image selected from among the first image and the second image.

3. The image capturing module according to Claim 1 or 2, wherein
the image processing section selects the focused image for each of a plurality of image regions, and generates the composite image by combining the edge component extracted from the selected focused image with another image for each image region.

4. The image capturing module according to any one of Claims 1 to 3, wherein the image processing section selects the focused image based on spatial frequency components extracted respectively from the first image and the second image.

5. The image capturing module according to any one of Claims 1 to 4, wherein the first optical system includes a first lens that focuses light from the subject,
the first light receiving section includes a first wavelength filter that transmits light in the first wavelength region from among the light from the subject,
the second optical system includes a second lens that focuses light from the subject, and
the second light receiving section includes a second wavelength filter that transmits light in the second wavelength region from among the light from the subject.

6. The image capturing module according to Claim 5, wherein
the first lens has an axial chromatic aberration, and
the second lens has substantially the same focusing characteristics as the first lens.

7. The image capturing module according to any one of Claims 1 to 6, further comprising:
a third optical system that focuses light in a third wavelength region and has a different focal position than the first optical system and the second optical system; and
a third light receiving section that includes a plurality of light receiving elements for receiving light from the subject through the third optical system, wherein
the image processing section generates the composite image to have, as the brightness component over the first wavelength region, the second wavelength region, and the third wavelength region, an edge component extracted from the focused image, which is whichever of the first image, the second image, and a third image captured by the third light receiving section the subject is more focused in.

8. The image capturing module according to Claim 7, wherein
the light receiving elements of the first light receiving section, the second light receiving section, and the third light receiving section are all formed on a single substrate.

9. The image capturing module according to Claim 7 or 8, wherein
a plurality of the first optical systems are provided that each have a different focal position,
a plurality of the first light receiving sections are provided corresponding to the first optical systems, and
the image processing section generates the composite image to have, as the brightness component over the first wavelength region, the second wavelength region, and the third wavelength region, an edge component extracted from the focused image, which is whichever of a plurality of the first images captured by the first light receiving sections, the second image, and the third image the subject is most focused in.

10. The image capturing module according to Claim 9, wherein the first wavelength region is a green wavelength region.

11. An image capturing apparatus that comprises the image capturing module according to any one of Claims 1 to 10 and captures an image of the subject using the image capturing module.
